# EUROPEAN PATENT SPECIFICATION

(11) **EP 2 704 820 B1**
(45) Date of publication and mention of the grant of the patent: **12.07.2017**
(21) Application number: 12721112.6
(22) Date of filing: 04.05.2012
(51) Int. Cl.: B01F 17/00, C08G 63/685, C08G 63/91, C09D 11/10

(54) **POLYESTER QUATERNARY SALT AND COMPOSITIONS THEREOF**
QUARTÄRES POLYESTERSALZ UND ZUSAMMENSETZUNGEN DARAUS
SEL QUATERNAIRE DE POLYESTER ET COMPOSITIONS COMPRENANT CELUI-CI

(30) Priority: 06.05.2011 US 201161483280 P
(43) Date of publication of application: 12.03.2014
(73) Proprietor: Lubrizol Advanced Materials, Inc., Cleveland, OH 44141-3247 (US)
(72) Inventor: THETFORD, Dean, Blackley Greater Manchester M9 8ZS (GB); MORETON, David, J., Belper Derbyshire DE564AN (GB); GREENFIELD, Hannah, Belper Derbyshire DE564AN (GB); JONES, Joanne, L., Belper Derbyshire DE564AN (GB)
(74) Representative: Bradley, Josephine Mary
(86) International application number: PCT/US2012/036415
(87) International publication number: WO 2012/154515

(56) References cited:
- WO-A1-2010/033323
- GB-A- 1 373 660

## Description

### FIELD OF INVENTION

The invention relates to a composition containing a particulate solid; an organic medium; and a quaternised polyester salt which comprises a product obtained/obtainable by reaction of (i) a polyester containing a tertiary amino group; and (ii) a quaternising agent suitable for converting the tertiary amino group to a quaternary nitrogen, wherein the quaternising agent is a hydrocarbyl epoxide in combination with an acid, or mixtures thereof. The invention further relates to the use of the product as a dispersant. The invention further relates to the use of the dispersant in media, such as inks, mill bases, plastics and paints.

### BACKGROUND OF THE INVENTION

Many formulations such as inks, paints, mill bases, and plastics materials require effective dispersants for uniformly distributing a particulate solid in an organic medium. The organic medium may vary from a polar to non-polar organic medium. Dispersants containing terminal basic groups such as poly(lower alkylene)imine chains are well known and are generally prepared by reaction of the polyimine with polyester chains containing terminal acid groups, the reaction results in a mixture of amide and salt forms. However, many of these dispersants have limited performance towards viscosity and stability properties, which when incorporated into printing inks or paints, give the inks and paints with poor flow characteristics.

U.S. Patent No. 5,000,792 discloses polyesteramine dispersants obtainable by reacting 2 parts of polyhydroxycarboxylic acids with 1 part of dialkylenetriamine.

British Patent GB 1,373,660 discloses polyesteramine dispersants obtainable by reaction of polyhydroxycarboxylic acids with diamines especially alkylenediamines and their salts thereof.

European Patent Application EP 1 896 546 discloses a composition comprising (i) a particulate solid; (ii) an organic medium; and (iii) a salt of a hydrocarbyl-substituted acylating agent.

### SUMMARY OF THE INVENTION

The composition described herein may be capable of providing at least one of improved gloss, reduced haze, improved flocculation, resistance, increased colour strength, improved flow characteristics, and increased stability.

In one embodiment, the invention provides a composition comprising a particulate solid; an organic medium (typically an organic liquid); and a quaternised polyester salt which comprises a product obtained/obtainable by reaction of (i) a polyester containing a tertiary amino group; and (ii) a quaternising agent suitable for converting the tertiary amino group to a quaternary nitrogen, wherein the quaternising agent is a hydrocarbyl epoxide in combination with an acid, or mixtures thereof.

In one embodiment, the invention provides a mill base composition comprising a particulate solid, an organic medium (typically a an organic liquid) and a quaternised polyester salt which comprises a product obtained/obtainable by reaction of (i) a polyester containing a tertiary amino group; and (ii) a quaternising agent suitable for converting the tertiary amino group to a quaternary nitrogen, wherein the quaternising agent is a hydrocarbyl epoxide in combination with an acid, or mixtures thereof.

In one embodiment, the invention provides a paint or ink composition comprising a particulate solid, an organic liquid, a binder and a quaternised polyester salt which comprises a product obtained/obtainable by reaction of (i) a polyester containing a tertiary amino group; and (ii) a quaternising agent suitable for converting the tertiary amino group to a quaternary nitrogen, wherein the quaternising agent is a hydrocarbyl epoxide in combination with an acid, or mixtures thereof.

Also disclosed herein is the use of a quaternised polyester salt which comprises a product obtained/obtainable by reaction of (i) a polyester containing a tertiary amino group; and (ii) a quaternising agent suitable for converting the tertiary amino group to a quaternary nitrogen, wherein the quaternising agent is a hydrocarbyl epoxide in combination with an acid, or mixtures thereof as a dispersant in composition disclosed herein.

The polyester quaternary salt may have an acid value in the range of 0 to 20, or 0 to 15 mg KOH/g.

### DETAILED DESCRIPTION OF THE INVENTION

The present invention provides a composition and use as disclosed herein above.

### The Polyester Quaternary Ammonium Salt

The polyester quaternary salt of the invention includes quaternised polyester amine salts. The additives may also be described as quaternary polyester salts. The additives of the invention may be described as the reaction product of: a polyester containing a tertiary amino group; and a quaternising agent suitable for converting the tertiary amino group to a quaternary nitrogen. The quaternising agent is a hydrocarbyl epoxide in combination with an acid, or mixtures thereof.

### The Non-Quaternised Polyester

The polyester containing a tertiary amino group used in the preparation of the additives of the invention may also be described as a non-quaternised polyester containing a tertiary amino group.

In some embodiments, the polyester may be the reaction product of a fatty carboxylic acid containing at least one hydroxyl group and a compound having an oxygen or nitrogen atom capable of condensing with said acid and further having a tertiary amino group. Suitable fatty carboxylic acids that may be used in the preparation of the polyesters described above may be represented by the formula: 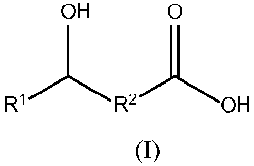 where R¹ may be a hydrogen or a hydrocarbyl group containing from 1 to 20 carbon atoms and R² may be a hydrocarbylene group containing from 1 to 20 carbon atoms. In some embodiments R¹ contains from 1 to 12, 2 to 10, 4 to 8 or even 6 carbon atoms, and R² contains from 2 to 16, 6 to 14, 8 to 12, or even 10 carbon atoms.

In some embodiments, the fatty carboxylic acid used in the preparation of the polyester may be 12-hydroxystearic acid, ricinoleic acid, 12-hydroxy dodecanoic acid, 5-hydroxy dodecanoic acid, 5-hydroxy decanoic acid, 4-hydroxy decanoic acid, 10-hydroxy undecanoic acid, or combinations thereof.

In some embodiments, the compound having an oxygen or nitrogen atom capable of condensing with said acid and further having a tertiary amino group may be represented by the formula: 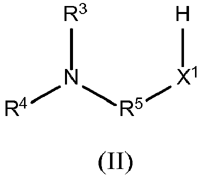 wherein R³ may be a hydrocarbyl group containing from 1 to 10 carbon atoms; R⁴ may be a hydrocarbyl group containing from 1 to 10 carbon atoms; R⁵ may be a hydrocarbylene group containing from 1 to 20 carbon atoms; and X¹ may be O or NR⁶ where R⁶ may be a hydrogen or a hydrocarbyl group containing from 1 to 10 carbon atoms. In some embodiments, R³ contains from 1 to 6, 1 to 2, or even 1 carbon atom, R⁴ contains from 1 to 6, 1 to 2, or even 1 carbon atom, R⁵ contains from 2 to 12, 2 to 8 or even 3 carbon atoms, and R⁶ contains from 1 to 8, or 1 to 4 carbon atoms. In some of these embodiments, formula (II) becomes: 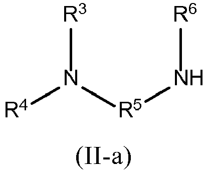 or 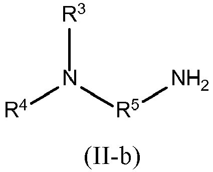 wherein the various definitions provided above still apply.

Examples of nitrogen or oxygen containing compounds capable of condensing with the acylating agents, which also have a tertiary amino group, or compounds that may be alkylated into such compounds, include but are not limited to: 1-aminopiperidine, 1-(2-aminoethyl)piperidine, 1-(3-aminopropyl)-2-pipecoline, 1-methyl-(4-methylamino)piperidine, 4-(1-pyrrolidinyl)piperidine, 1-(2-aminoethyl)pyrrolidine, 2-(2-aminoethyl)-1-methylpyrrolidine, N,N-diethylethylenediamine, N,N-dimethylethylenediamine, N,N-dibutylethylenediamine, N,N-diethyl-1,3-diaminopropane, N,N-dimethyl-1,3-diaminopropane, N,N,N'-trimethylethylenediamine, N,N-dimethyl-N'-ethylethylenediamine, N,N-diethyl-N'-methylethylenediamine, N,N,N'-triethylethylenediamine, 3-dimethylaminopropylamine, 3-diethylaminopropylamine, 3-dibutylaminopropylamine, N,N,N'-trimethyl-1,3-propanediamine, N,N,2,2-tetramethyl-1,3-propanediamine, 2-amino-5-diethylaminopentane, N,N,N',N'-tetraethyldiethylenetriamine, 3,3'-diamino-N-methyldipropylamine, 3,3'-iminobis(N,N-dimethylpropylamine), or combinations thereof. In such embodiments, the resulting additive includes a quaternary ammonium amide salt, containing an amide group and a quaternary ammonium salt.

The nitrogen or oxygen containing compounds may further include aminoalkyl substituted heterocyclic compounds such as 1-(3-aminopropyl)imidazole and 4-(3-aminopropyl)morpholine.

Another type of nitrogen or oxygen containing compounds capable of condensing with the acylating agent and having a tertiary amino group, in some embodiments after further alkylation, include alkanolamines including but not limited to triethanolamine, N,N-dimethylaminopropanol, N,N-diethylaminopropanol, N,N-diethylaminobutanol, triisopropanolamine, 1-[2-hydroxyethyl]piperidine, 2-[2-(dimethylamine)ethoxy]-ethanol, N-ethyldiethanolamine, N-methyldiethanol amine, N-butyldiethanolamine, N,N-diethylaminoethanol, N,N-dimethyl aminoethanol, 2-dimethylamino-2-methyl-1-propanol. In embodiments where alkanolamines and/or similar materials are used, the resulting additive includes a quaternary ammonium ester salt, containing an ester group and a quaternary ammonium salt.

In one embodiment, the nitrogen or oxygen containing compound may be triisopropanolamine, 1-[2-hydroxyethyl]piperidine, 2-[2-(dimethylamino) ethoxy]-ethanol, N-ethyldiethanolamine, N-methyldiethanolamine, N-butyldiethanolamine, N,N-diethylaminoethanol, N,N-dimethylaminoethanol, 2-dimethylamino-2-methyl-1-propanol, or combinations thereof.

In some embodiments, the compound having an oxygen or nitrogen atom capable of condensing with said acid and further having a tertiary amino group comprises N,N-diethylethylenediamine, N,N-dimethylethylenediamine, N,N-dibutylethylenediamine, N,N-diethyl-1,3-diaminopropane, N,N-dimethylaminoethanol, N,N-diethylaminoethanol, or combinations thereof. In one embodiment, the compound having an oxygen or nitrogen atom capable of condensing with said acid and further having a tertiary amino group may be 3-dimethylaminopropylamine.

The quaternised polyester salt (may be a quaternised polyester amide) (may also be referred to as polyester aminoalkyl amide) salt. In such embodiments, the polyester containing a tertiary amino group used to prepare the quaternised polyester salt may be a polyester amide containing a tertiary amino group. In some of these embodiments, the amine or aminoalcohol may be reacted with a monomer and then the resulting material may be polymerized with additional monomer, resulting in the desired polyester amide which may then be quaternised.

In some embodiments, the quaternised polyester salt includes a cation represented by the following formula: 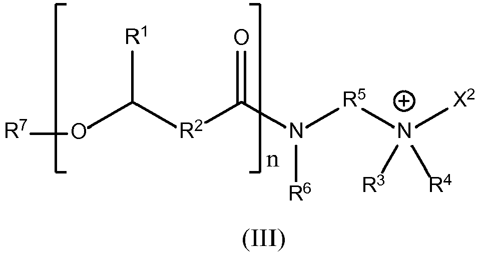 wherein R¹ may be a hydrogen or a hydrocarbyl group containing from 1 to 20 carbon atoms and R² may be a hydrocarbylene group containing from 1 to 20 carbon atoms; R³ may be a hydrocarbyl group containing from 1 to 10 carbon atoms; R⁴ may be a hydrocarbyl group containing from 1 to 10 carbon atoms; R⁵ may be a hydrocarbylene group containing from 1 to 20 carbon atoms; R⁶ may be a hydrogen or a hydrocarbyl group containing from 1 to 10 carbon atoms; n may be a number from 1 to 10; R⁷ may be hydrogen, a hydrocarbonyl group containing from 1 to 22 carbon atoms, or a hydrocarbyl group containing from 1 to 22 carbon atoms; and X² may be a group derived from the quaternising agent. In some embodiments, R⁶ may be hydrogen.

As above, in some embodiments R¹ contains from 1 to 12, 2 to 10, 4 to 8 or even 6 carbon atoms, and R² contains from 2 to 16, 6 to 14, 8 to 12, or even 10 carbon atoms, R³ contains from 1 to 6, 1 to 2, or even 1 carbon atom, R⁴ contains from 1 to 6, 1 to 2, or even 1 carbon atom, R⁵ contains from 2 to 12, 2 to 8 or even 3 carbon atoms, and R⁶ contains from 1 to 8, or 1 to 4 carbon atoms. In any of these embodiments, n may be from 2 to 9, or 3 to 7, and R⁷ may contain from 6 to 22, or 8 to 20 carbon atoms.

In these embodiments, the quaternised polyester salt may be essentially capped with a C1-22, or a C8-20, fatty acid. Examples of suitable acids include oleic acid, palmitic acid, stearic acid, erucic acid, lauric acid, 2-ethylhexanoic acid, 9,11-linoleic acid, 9,12-linoleic acid, 9,12,15-linolenic acid, abietic acid, or combinations thereof.

The number average molecular weight (Mn) of the quaternised polyester salts of the invention may be from 500 to 3000, or from 600 to 2500.

The polyester useful in the present invention may be obtained/obtainable by heating one or more hydroxycarboxylic acids or a mixture of the hydroxycarboxylic acid and a carboxylic acid, optionally in the presence of an esterification catalyst. The hydroxycarboxylic acids can have the formula HO-X-COOH wherein X may be a divalent saturated or unsaturated aliphatic radical containing at least 8 carbon atoms and in which there are at least 4 carbon atoms between the hydroxy and carboxylic acid groups, or from a mixture of such a hydroxycarboxylic acid and a carboxylic acid which is free from hydroxy groups. This reaction may be carried out at a temperature in the region of 160°C to 200°C, until the desired molecular weight has been obtained. The course of the esterification may be followed by measuring the acid value of the product, with the desired polyester, in some embodiments, having an acid value in the range of 10 to 100 mg KOH/g or in the range of 18 to 50 mg KOH/g. The indicated acid value range of 10 to 100 mg KOH/g is equivalent to a number average molecular weight range of 5600 to 560. The water formed in the esterification reaction may be removed from the reaction medium, and this may be conveniently done by passing a stream of nitrogen over the reaction mixture or, by carrying out the reaction in the presence of a solvent, such as toluene or xylene, and distilling off the water as it is formed.

The polyester may be reacted with amine or aminoalcohol of formula (II) at a temperature in the range of 110 to 200°C until the desired polyester amide or polyester has an acid value in the range of 0 to 15 mg KOH/g.

The resulting polyester can then be isolated in a conventional manner; however, when the reaction is carried out in the presence of an organic solvent whose presence would not be harmful in the subsequent application, the resulting solution of the polyester may be used.

In the said hydroxycarboxylic acids, the radical represented by X may contain from 12 to 20 carbon atoms, optionally where there are between 8 and 14 carbon atoms between the carboxylic acid and hydroxy groups. In some embodiments, the hydroxy group may be a secondary hydroxy group.

Specific examples of such hydroxycarboxylic acids include ricinoleic acid, a mixture of 9- and 10-hydroxystearic acids (obtained by sulphation of oleic acid followed by hydrolysis), and 12-hydroxystearic acid, and especially the commercially available hydrogenated castor oil fatty acid which contains in addition to 12-hydroxystearic acid minor amounts of stearic acid and palmitic acid.

The carboxylic acids which may be used in conjunction with the hydroxycarboxylic acids to obtain these polyesters are preferably carboxylic acids of saturated or unsaturated aliphatic compounds, particularly alkyl and alkenyl carboxylic acids containing a chain of from 8 to 20 carbon atoms. As examples of such acids, there may be mentioned lauric acid, palmitic acid, stearic acid and oleic acid.

In one embodiment, the polyester may be derived from commercial 12-hydroxy-stearic acid having a number average molecular weight of about 1600. Polyesters such as this are described in greater detail in U.K. Patent Specification Nos. 1,373,660 and 1,342,746.

### The Quaternising Agent

The quaternised salt of the present invention may be formed when the non-quaternised compounds described above are reacted with a quaternising agent. The quaternising agent is a hydrocarbyl epoxide in combination with an acid, or mixtures thereof.

The hydrocarbyl epoxide may be represented by the following formula, in combination with an acid: 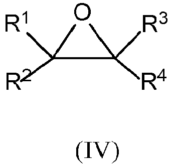 wherein R¹, R², R³ and R⁴ may be independently H or a hydrocarbyl group contain from 1 to 50 carbon atoms. Examples of hydrocarbyl epoxides include: ethylene oxide, propylene oxide, butylene oxide, styrene oxide and combinations thereof. In one embodiment, the quaternising agent does not contain any styrene oxide.

In some embodiments, the acid used with the hydrocarbyl epoxide may be a separate component, such as acetic acid. In other embodiments, for example, when the hydrocarbyl acylating agent may be a dicarboxylic acylating agent, no separate acid component is needed. In such embodiments, the polyester quaternary salt may be prepared by combining reactants which are essentially free of, or even free of, a separate acid component, such as acetic acid, and rely on the acid group of the hydrocarbyl acylating agent instead. In other embodiments, a small amount of an acid component may be present, but at <0.2 or even <0.1 moles of acid per mole of hydrocarbyl acylating agent.

In some embodiments, the quaternising agent of the invention docs not contain any substituent group that contains more than 20 carbon atoms. In other words, in some embodiments, the long substituent group that allows for the resulting additive to be organic soluble and thus useful for the purposes of this invention is not provided by the quaternising agent but instead is brought to the additive by the non-quaternised compound described above.

The polyester amide or polyester having an amine functionality is reacted with quaternising agent at a temperature in the range of 30°C to 100°C to produce a polyester quaternary salt with an acid value in the range of 0 to 15 mg KOH/g.

In certain embodiments, the molar ratio of the polyester amide or polyester having an amine functionality to quaternising agent to give the polyester quaternary salt may be 1:0.1 to 2, or 1:1 to 1.5, or 1:1 to 1.3.

### Industrial Application

In one embodiment, the polyester quaternary salt as described herein is a processing aid or dispersant.

The particulate solid present in the composition may be any inorganic or organic solid material.

The solid particulate may be an organic pigment, an inorganic pigment, an organic filler, an inorganic filler, a flame retardant, or mixtures thereof.

The solid particulate may be an inorganic pigment, an inorganic filler, a flame retardant, or mixtures thereof. In one embodiment, the particulate solid is a pigment.

The solid particulate may an organic pigment, an organic filler, or mixtures thereof.

In one embodiment, the particulate solid is an organic pigment from any of the recognised classes of pigments described, for example, in the Third Edition of the Colour Index (1971) and subsequent revisions of, and supplements thereto, under the chapter headed "Pigments".

Examples of organic pigments are those from the azo, disazo, trisazo, condensed azo, azo lakes, naphthol pigments, anthrapyrimidine, benzimidazolone, carbazole, diketopyrrolopyrrole, flavanthrone, indigoid pigments, isoindolinone, isoindoline, isoviolanthrone, metal complex pigments, oxazine, perylene, perinone, pyranthrone, pyrazoloquinazolone, quinophthalone, triarylcarbonium pigments, triphendioxazine, xanthene, thioindigo, indanthrone, isoindanthrone, anthanthrone, anthraquinone, isodibenzanthrone, triphendioxazine, quinacridone and phthalocyanine series, especially copper phthalocyanine and its nuclear halogenated derivatives, and also lakes of acid, basic and mordant dyes, and carbon black. Carbon black, although strictly inorganic, behaves more like an organic pigment in its dispersing properties. In one embodiment, the organic pigments are phthalocyanines, especially copper phthalocyanines, monoazos, disazos, indanthrones, anthranthrones, quinacridones, diketopyrrolopyrroles, perylenes and carbon black.

Inorganic solids include: extenders and fillers such as talc, kaolin, montmorillonites including bentonites, hectorites and saponites, mica, silica, barytes and chalk, flame-retardant fillers such as alumina trihydrate, natural magnesium hydroxide; or brucite, particulate ceramic materials such as alumina, silica, zirconia, titania, silicon nitride, boron nitride, silicon carbide, boron carbide, mixed silicon-aluminium nitrides and metal titanates; particulate magnetic materials such as the magnetic oxides of transition metals, especially iron and chromium, e.g., gamma-Fe₂O₃, Fe₃O₄, and cobalt-doped iron oxides, calcium oxide, ferrites, especially barium ferrites; and metal particles, especially metallic iron, nickel, cobalt, copper and alloys thereof. Flame retardants may also include pentabromodiphenyl ether, octabromodiphenyl ether, decabromodiphenyl ether, hexabromocyclododecane, ammonium polyphosphate, melamine, melamine cyanurate, antimony oxide and borates; biocides or industrial microbial agents such as those mentioned in tables 2, 3, 4, 5, 6, 7, 8 and 9 of the chapter entitled "Industrial Microbial Agents" in Kirk-Othmer's Encyclopedia of Chemical Technology, Volume 13, 1981, 3rd Edition.

Examples of other inorganic pigments include metallic oxides such as titanium dioxide, rutile titanium dioxide and surface coated titanium dioxide, titanium oxides of different colours such as yellow and black, iron oxides of different colours such as yellow, red, brown and black, zinc oxide, zirconium oxides, aluminium oxide, oxymetallic compounds such as bismuth vanadate, cobalt aluminate, cobalt stannate, cobalt zincate, zinc chromate and mixed metal oxides of manganese, nickel, titanium, chromium, antimony, magnesium, cobalt, iron and aluminium, Prussian blue, vermillion, ultramarine, zinc phosphate, zinc sulphide, molybdates and chromates of calcium and zinc, metal effect pigments such as aluminium flake, copper, and copper/zinc alloy, pearlescent flake such as lead carbonate and bismuth oxychloride.

The organic medium present in the composition of the invention in one embodiment is a plastics material and in another embodiment an organic liquid. The organic liquid may be a non-polar or a polar organic liquid. By the term "polar" in relation to the organic liquid, it is meant that an organic liquid is capable of forming moderate to strong bonds as described in the article entitled "A Three Dimensional Approach to Solubility" by Crowley et al. in Journal of Paint Technology, Vol. 38, 1966, at page 269. Such organic liquids generally have a hydrogen bonding number of 5 or more as defined in the abovementioned article.

In one embodiment, polar organic liquids are dialkyl ketones, alkyl esters of alkane carboxylic acids and alkanols, especially such liquids containing up to, and including, a total of 6 carbon atoms. As examples of the polar organic liquids include dialkyl and cycloalkyl ketones, such as acetone, methyl ethyl ketone, diethyl ketone, di-isopropyl ketone, methyl isobutyl ketone, di-isobutyl ketone, methyl isoamyl ketone, methyl n-amyl ketone and cyclohexanone; alkyl esters such as methyl acetate, ethyl acetate, isopropyl acetate, butyl acetate, ethyl formate, methyl propionate, methoxy propylacetate and ethyl butyrate; glycols and glycol esters and ethers, such as ethylene glycol, 2-ethoxyethanol, 3-methoxypropylpropanol, 3-ethoxypropylpropanol, 2-butoxyethyl acetate, 3-methoxypropyl acetate, 3-ethoxypropyl acetate and 2-ethoxyethyl acetate; alkanols such as methanol, ethanol, n-propanol, isopropanol, n-butanol and isobutanol (also known as 2-methylpropanol), terpineol and dialkyl and cyclic ethers such as diethyl ether and tetrahydrofuran. In one embodiment, solvents are alkanols, alkane carboxylic acids and esters of alkane carboxlic acids. In one embodiment, the present invention is suitable for organic liquids that are substantially non-soluble in an aqueous medium. Furthermore, a person skilled in the art will appreciate that small quantities of an aqueous medium (such as water, glycols, glycol ethers, glycol esters and alcohols) may be present in the organic liquids provided the overall organic liquid is substantially non-soluble in an aqueous medium.

Examples of organic liquids, which may be used as polar organic liquids, are film-forming resins such as are suitable for the preparation of inks, paints and chips for use in various applications such as paints and inks. Examples of such resins include polyamides, such as Versamid™ and Wolfamid™, and cellulose ethers, such as ethyl cellulose and ethyl hydroxyethyl cellulose, nitrocellulose and cellulose acetate butyrate resins, including mixtures thereof. Examples of paint resins include short oil alkyd/melamine-formaldehyde, polyester/melamine-formaldehyde, thermosetting acrylic/melamine-formaldehyde, long oil alkyd, medium oil alkyd, short oil alkyd, polyether polyols and multi-media resins such as acrylic and urea/aldehyde.

In one embodiment, non-polar organic liquids are compounds containing aliphatic groups, aromatic groups or mixtures thereof. The non-polar organic liquids include non-halogenated aromatic hydrocarbons (e.g., toluene and xylene), halogenated aromatic hydrocarbons (e.g. chlorobenzene, dichlorobenzene, chlorotoluene), non-halogenated aliphatic hydrocarbons (e.g., linear and branched aliphatic hydrocarbons containing six or more carbon atoms both fully and partially saturated), halogenated aliphatic hydrocarbons (e.g., dichloromethane, carbon tetrachloride, chloroform, trichloroethane) and natural non-polar organics (e.g., vegetable oil, sunflower oil, rapeseed oil, linseed oil, terpenes and glycerides).

In one embodiment, the organic liquid comprises at least 0.1% by weight, or 1% by weight or more of a polar organic liquid based on the total organic liquid.

If desired, the compositions containing an organic liquid may contain other ingredients, for example, resins (where these do not already constitute the organic medium), binders, co-solvents, cross-linking agents, fluidising agents, wetting agents, anti-sedimentation agents, plasticisers, surfactants, dispersants other than the compound of the present invention, humectants, anti-foamers, anti-cratering agents, rheology modifiers, heat stabilizers, light stabilizers, UV absorbers, antioxidants, levelling agents, gloss modifiers, biocides and preservatives.

The compound of the present invention (the quaternised polyester salt) may be used in combination with a fluidising agent. The fluidising agent may be described as a coloured acid or pigment derivative. By the term "coloured acid", it is meant as an organic pigment or dye containing at least one (typically one to six) acid group(s). The acid groups may include sulphonic, phosphonic, or carboxylic acid groups. It is convenient to use an acid form of the organic pigment or a quaternised ammonium salt version.

The compositions containing an organic liquid may be prepared by any of the conventional methods known for preparing dispersions. Thus, the solid, the organic or aqueous medium and the dispersant may be mixed in any order, the mixture then being subjected to a mechanical treatment to reduce the particles of the solid to an appropriate size, for example, by high speed mixing, ball milling, basket milling, bead milling, gravel milling, sand grinding, attritor grinding, two roll or three roll milling, plastic milling until the dispersion is formed. Alternatively, the solid may be treated to reduce its particle size independently or in admixture with either the organic medium or the dispersant, the other ingredient or ingredients then being added and the mixture being agitated to provide the composition. The composition can also be made by grinding or milling the dry solid with the dispersant and then adding the liquid medium or mixing the solid with the dispersant in a liquid medium in a pigment flushing process.

The composition of the present invention is particularly suited to liquid dispersions. In one embodiment, such dispersion compositions comprise:
(a) from 0.5 to 30 parts of a particulate solid;
(b) from 0.5 to 30 parts of a compound of Formula (1); and
(c) from 40 to 99 parts of an organic liquid and/or water; wherein all relative parts are by weight and the amounts (a) +(b) +(c) = 100.

In one embodiment, component a) comprises from 0.5 to 30 parts of a pigment and such dispersions are useful as (liquid) inks, paints and millbases.

If a composition is required comprising a particulate solid and a dispersant of a polyester quaternary salt of the invention in dry form, the organic liquid is typically volatile so that it may be readily removed from the particulate solid by a simple separation means such as evaporation. In one embodiment, the composition comprises the organic liquid.

If the dry composition consists essentially of the dispersant of Formula (1) and the particulate solid, it typically contains at least 0.2%, at least 0.5% or at least 1.0% dispersant of a polyester quaternary salt of the invention based on weight of the particulate solid. In one embodiment, the dry composition contains not greater than 100%, not greater than 50%, not greater than 20% or not greater than 10% by weight of dispersant of a polyester quaternary salt of the invention based on the weight of the particulate solid.

As disclosed hereinbefore, the compositions of the invention are suitable for preparing mill-bases wherein the particulate solid is milled in an organic liquid in the presence of a compound for polyester quaternary salt of the invention.

Thus, according to a still further aspect of the invention, there is provided a mill-base comprising a particulate solid, an organic liquid and a polyester quaternary salt of the invention.

Typically, the mill-base contains from 20 to 70% by weight particulate solid based on the total weight of the mill-base. In one embodiment, the particulate solid is not less than 10 or not less than 20% by weight of the mill-base. Such mill-bases may optionally contain a binder added either before or after milling.

The binder is a polymeric material capable of binding the composition on volatilisation of the organic liquid.

Binders are polymeric materials including natural and synthetic materials. In one embodiment, binders include poly(meth)acrylates, polystyrenics, polyesters, polyurethanes, alkyds, polysaccharides such as cellulose, and natural proteins such as casein. In one embodiment, the binder is present in the composition at more than 100% based on the amount of particulate solid, more than 200%, more than 300% or more than 400%.

The amount of optional binder in the mill-base can vary over wide limits but is typically not less than 10%, and often not less than 20% by weight of the continuous/liquid phase of the mill-base. In one embodiment, the amount of binder is not greater than 50% or not greater than 40% by weight of the continuous/liquid phase of the mill-base.

The amount of dispersant in the mill-base is dependent on the amount of particulate solid but is typically from 0.5 to 5% by weight of the mill-base.

Dispersions and mill-bases made from the composition of the invention are particularly suitable for use in aqueous, non-aqueous and solvent free formulations in which energy curable systems (ultra-violet, laser light, infra-red, cationic, electron beam, microwave) are employed with monomers, oligomers, etc. or a combination present in the formulation. They are particularly suitable for use in coating such as paints, varnishes, inks, other coating materials and plastics. Suitable examples include their use in low, medium and high solids paints, general industrial paints including baking, 2 component and metal coating paints such as coil and can coating, powder coating, UV-curable coating, wood varnishes; inks, such as flexographic, gravure, offset, lithographic, letterpress or relief, screen printing and printing inks for packaging printing, non impact inks such as ink jet inks, inks for ink jet printers and print varnishes such as overprint varnishes; polyol and plastisol dispersions; non-aqueous ceramic processes, especially tape-casting, gel-casting, doctor-blade, extrusion and injection moulding type processes, a further example would be in the preparation of dry ceramic powders for isostatic pressing; composites such as sheet moulding and bulk moulding compounds, resin transfer moulding, pultrusion, hand-lay-up and spray-lay-up processes, matched die moulding; construction materials like casting resins, cosmetics, personal care like nail coating, sunscreens, adhesives, toners, plastics materials and electronic materials such as coating formulations for colour filter systems in displays including OLED devices, liquid crystal displays and electrophoretic displays, glass coating including optical fibre coating, reflective coating or anti-reflective coating, conductive and magnetic inks and coating. They are useful in the surface modification of pigments and fillers to improve the dispersibility of dry powders used in the above applications. Further examples of coating materials are given in Bodo Muller, Ulrich Poth, Lackformulierung und Lackrezeptur, Lehrbuch fr Ausbildung und Praxis, Vincentz Verlag, Hanover (2003) and in P.G.Garrat, Strahlenhartung, Vincentz Verlag, Hanover (1996). Examples of printing ink formulations are given in E.W.Flick, Printing Ink and Overprint Varnish Formulations - Recent Developments, Noyes Publications, Park Ridge NJ, (1990) and subsequent editions.

The following examples provide illustrations of the invention.

### EXAMPLES

Dispersant 1: 12-hydroxystearic acid (6eq) is heated to 110°C and dimethylaminopropylamine (1 equivalent) added. The reaction is heated to 130°C and held for 4 hours. The reaction is then cooled to 100°C, and zirconium butoxide (0.57 wt %) is charged. The reaction is heated to 195°C and held for 12 hours. The resulting product, a non-quaternised polyester amine is cooled and discharged.

The non-quaternised polyester amine (550g, 0.283mol) (may also be referred to as polyester aminoalkyl amide), and methanol (117.8g, 3.68mol) are charged to a 1-liter round bottom flange flask. The flask is equipped with a reaction vessel fitted with stirrer, condenser, nitrogen line and mantle/thermocouple/temperature controller system. The flask is heated to 55°C with agitation (180 rpm). After a 10 minute holding at 55°C, acetic acid (16.98g, 0.283mol) is charged to the flask. Propylene oxide (29.71ml, 0.42mol) is then added subsurface via syringe pump over 3 hours 40 minutes and the reaction held for 20 hours. The resultant product is then vacuum distilled, and methanol is removed under vacuum at 80°C over a period of 6 hours. The resulting product, is a quaternised polyester amide salt, is cooled and 543g collected. The collected material has a TAN of 6.08 mg KOH/g, a TBN of 28.25 mg KOH/g, a kinematic viscosity at 100°C of 240.7 mm²/s (as measured by ASTM D445), an acetate peak by IR at 1574 cm⁻¹, and is 1.22% nitrogen.

Dispersant 2: A non-quaternised polyester amide (may also be referred to as polyester aminoalkyl amide) is prepared by reacting, in a jacketed reaction vessel fitted with stirrer, condenser, feed pump attached to subline addition pipe, nitrogen line and thermocouple/temperature controller system, 6 moles of ricinoleic acid and 1 mole of dimethylaminopropylamine where the reaction is carried out at about 130°C and held for about 4 hours. The reaction mixture is then cooled to about 100°C and zirconium butoxide is added, in an amount so that the catalyst makes up 0.57 percent by weight of the reaction mixture. The reaction mixture is heated to about 195°C and held for about 12 hours. The resulting product is cooled and collected.

A quaternised polyester amide salt is prepared by reacting, in a jacketed reaction vessel fitted with stirrer, condenser, feed pump attached to subline addition pipe, nitrogen line and thermocouple/temperature controller system, 511.7g of the non-quaternised polyester amide prepared above, 179 g of methanol, 18.1 g of acetic acid, and 28.2 ml of propylene oxide, where the reaction is carried out at about 55°C and the propylene oxide is fed in to the reaction vessel over about 17 hours. 184.5 g of diluent oil is added. 902.6 g of product is cooled and collected. The flask contents are vacuum distilled at 70°C for 2 hours until the methanol is removed. 181.6g of diluent oil is added. TAN and TBN analysis confirms about 45% by weight quaternised polyester amide salt, with the remaining material being primarily non-quaternised polyester amide. The collected material has a TAN of 9.19 mg KOH/g, a TBN of 16.77 mg KOH/g, a kinematic viscosity at 100°C of 57.31 mm²/s (as measured by ASTM D445), and 0.91 % nitrogen.

Dispersant 3: A non-quaternised polyester amide (may also be referred to as polyester aminoalkyl amide) is prepared by reacting, in a jacketed reaction vessel fitted with stirrer, condenser, feed pump attached to subline addition pipe, nitrogen line and thermocouple/temperature controller system, 6 moles of 12-hydroxystearic acid and 1 mole of dimethylaminopropylamine where the reaction is carried out at about 130°C and held for about 4 hours. The reaction mixture is then cooled to about 100°C and zirconium butoxide is added, in an amount so that the catalyst makes up 0.57 percent by weight of the reaction mixture. The reaction mixture is heated to about 195°C and held for about 12 hours. The resulting product is cooled and collected.

A quaternised polyester amide salt is prepared by reacting, in a jacketed reaction vessel fitted with stirrer, condenser, feed pump attached to subline addition pipe, nitrogen line and thermocouple/temperature controller system, 511.7g of the non-quaternised polyester amide prepared above, 179 g of methanol, 18.1 g of acetic acid, and 28.2 ml of propylene oxide, where the reaction is carried out at about 55°C and the propylene oxide is fed in to the reaction vessel over about 17 hours. 184.5 g of diluent oil is added. 902.6 g of product is cooled and collected. The flask contents are vacuum distilled at 70°C for 2 hours until the methanol is removed. 181.6g of diluent oil is added. Of the 902.6 g, 645.3 g is then placed in a reaction vessel with 111.3 g of C₂₀₋₂₄ alkylsulphonic acid. The reaction is heated to 60°C and held for 2 hours. The flask contents are vacuum distilled at 60°C to 100°C for 2 hours until the methanol and acetic acid are removed. TAN and TBN analysis confirms about 100% by weight quaternised polyester amide salt, with the remaining material being primarily non-quaternised polyester amide. The collected material has a TAN of 13.59 mg KOH/g, a TBN of 0 mg KOH/g, a kinematic viscosity at 100°C of 90.32 mm²/s (as measured by ASTM D445), and 0.81 % nitrogen.

Dispersant 4: A non-quaternised polyester amide (may also be referred to as polyester aminoalkyl amide) is prepared by reacting, in a jacketed reaction vessel fitted with stirrer, condenser, feed pump attached to subline addition pipe, nitrogen line and thermocouple/temperature controller system, 6 moles of 12-hydroxystearic acid and 1 mole of dimethylaminopropylamine where the reaction is carried out at about 130°C and held for about 4 hours. The reaction mixture is then cooled to about 100°C and zirconium butoxide is added, in an amount so that the catalyst makes up 0.57 percent by weight of the reaction mixture. The reaction mixture is heated to about 195°C and held for about 12 hours. The resulting product is cooled and collected.

A quaternised polyester amide salt is prepared by reacting, in a jacketed reaction vessel fitted with stirrer, condenser, feed pump attached to subline addition pipe, nitrogen line and thermocouple/temperature controller system, 528.6 g of the non-quaternised polyester amide prepared above, 120 g of methanol, 16.3 g of acetic acid, and 46.3 ml of styrene oxide, where the reaction is carried out at about 55°C and the propylene oxide is fed in to the reaction vessel over about 17 hours. 186 g of diluent oil is added. The flask contents are vacuum distilled at 55°C to 100°C for 2 hours until the methanol is removed. 765 g of product is cooled and collected. TAN, and TBN analysis confirms about 97% by weight quaternised polyester amide salt, with the remaining material being primarily non-quaternised polyester amide. The collected material has a TAN of 0.51 mg KOH/g, a TBN of 20.08 mg KOH/g, a kinematic viscosity at 100°C of 245 mm²/s (as measured by ASTM D445), and 1.06 wt % nitrogen.

Dispersant 5: A non-quaternised polyester amide (may also be referred to as polyester aminoalkyl amide) is prepared by reacting, in a jacketed reaction vessel fitted with stirrer, condenser, feed pump attached to subline addition pipe, nitrogen line and thermocouple/temperature controller system, 6 moles of 12-hydroxystearic acid and 1 mole of dimethylaminopropylamine where the reaction is carried out at about 130°C and held for about 4 hours. The reaction mixture is then cooled to about 100°C and zirconium butoxide is added, in an amount so that the catalyst makes up 0.57 percent by weight of the reaction mixture. The reaction mixture is heated to about 195°C and held for about 12 hours. The resulting product is cooled and collected.

A quaternised polyester amide salt is prepared by reacting, in a jacketed reaction vessel fitted with stirrer, condenser, feed pump attached to subline addition pipe, nitrogen line and thermocouple/temperature controller system, 528.6 g of the non-quaternised polyester amide prepared above, 120 g of methanol, 16.3 g of acetic acid, and 46.3 ml of styrene oxide, where the reaction is carried out at about 55°C and the styrene oxide is fed in to the reaction vessel over about 17 hours. 186 g of diluent oil is added. The flask contents are vacuum distilled at 55°C to 100°C for 2 hours until the methanol is removed. 765 g of product is cooled and collected. Of the 765 g, 468.5 g is placed in a reaction vessel with 88.6g of C₂₀₋₂₄ alkyl sulphonic acid and the vessel is heated to 60°C and held for 2 hours. The flask contents are vacuum distilled at 60°C to 100°C for 2 hours until the acetic acid is removed. TAN, FTIR and ESI-MS analysis confirms about 78% by weight quaternised polyester amide salt, with the remaining material being primarily non-quaternised polyester amide. The collected material has a TAN of 5.62 mg KOH/g, a TBN of 25.87 mg KOH/g, a kinematic viscosity at 100°C of 90.9 mm²/s (as measured by ASTM D445), and 0.73 wt. % nitrogen.

Dispersant 6: A non-quaternised polyester amide (may also be referred to as polyester aminoalkyl amide) is prepared by reacting, in a jacketed reaction vessel fitted with stirrer, condenser, feed pump attached to subline addition pipe, nitrogen line and thermocouple/temperature controller system, 6 moles of 12-hydroxystearic acid and 1 mole of dimethylaminopropylamine where the reaction is carried out at about 130°C and held for about 4 hours. The reaction mixture is then cooled to about 100°C and zirconium butoxide is added, in an amount so that the catalyst makes up 0.57 percent by weight of the reaction mixture. The reaction mixture is heated to about 195°C and held for about 12 hours. The resulting product is cooled and collected.

A quaternised polyester amide salt is prepared by reacting, in a jacketed reaction vessel fitted with stirrer, condenser, feed pump attached to subline addition pipe, nitrogen line and thermocouple/temperature controller system, 600 g of the non-quaternised polyester amide prepared above, 120 g of 2-ethylhexanol, 18.5 g of acetic acid, and 32.3 ml of propylene oxide, where the reaction is carried out at about 90°C and the propylene oxide is fed in to the reaction vessel over about 3.5 hours. The reaction mixture is then held at temperature for about 3 hours. 760 g of product is cooled and collected, which TAN, FTIR and ESI-MS analysis confirms to be about 80% by weight quaternised polyester amide salt, with the remaining material being primarily non-quaternised polyester amide. The collected material has a TAN of 1.26 mg KOH/g, a TBN of 23.82 mg KOH/g, a kinematic viscosity at 100°C of 28.58 mm²/s (as measured by ASTM D445), an acetate peak by IR at 1574 cm⁻¹, and is 1.22% nitrogen.

Dispersant 7: A non-quaternised polyester amide (may also be referred to as polyester aminoalkyl amide) is prepared by reacting, in a jacketed reaction vessel fitted with stirrer, condenser, feed pump attached to subline addition pipe, nitrogen line and thermocouple/temperature controller system, 1300 g of ricinoleic acid and 73.5 g of dimethylaminopropylamine where the reaction is carried out at about 130°C, the amine is added dropwise over about 8 minutes, and the reaction mixture held for about 4 hours. The reaction mixture is then cooled to about 100°C and 7.8 g of zirconium butoxide is added. The reaction mixture is heated to about 195°C and held for about 17 hours. The resulting product is filtered, cooled and collected. 1301 g of product is collected which has a TAN of 0 mg KOH/g and shows by IR an ester peak at 1732 cm⁻¹, an amide peak at 1654 cm⁻¹, but no acid peak at 1700 cm⁻¹.

A quaternised polyester amide salt is prepared by reacting, in a jacketed reaction vessel fitted with stirrer, condenser, feed pump attached to subline addition pipe, nitrogen line and thermocouple/temperature controller system, 600 g of the non-quaternised polyester amide prepared above, 123 g of 2-ethylhexanol, 18.9 g of acetic acid, and 33.1 ml of propylene oxide, where the reaction is carried out at about 90°C and the propylene oxide is fed in to the reaction vessel over about 3.5 hours. The reaction mixture is then held at temperature for about 3 hours. 751 g of product is cooled and collected, which TAN, FTIR and ESI-MS analysis confirms to be about 70% by weight quaternised polyester amide salt, with the remaining material being primarily non-quaternised polyester amide. The collected material has a TAN of 0 mg KOH/g, a TBN of 23.14 mg KOH/g, a kinematic viscosity at 100°C of 47.0 mm²/s (as measured by ASTM D445), an acetate peak by IR at 1574 cm⁻¹.

Dispersant 8: 12-hydroxystearic acid (6eq) is heated to 110°C and dimethylaminopropylamine (1 equivalent) added. The reaction is heated to 130°C and held for 4 hours. The reaction is then cooled to 100°C, and zirconium butoxide (0.57 wt %) is charged. The reaction is heated to 195°C and held for 12 hours. The resulting product, a non-quaternised polyester amine is cooled and discharged.

The non-quaternised polyester amine (614.3 g) (may also be referred to as polyester aminoalkyl amide), and methanol (117.8g, 3.68mol) are charged to a 1-liter round bottom flange flask. The flask is equipped with a reaction vessel fitted with stirrer, condenser, nitrogen line and mantle/thermocouple/temperature controller system. The flask is heated to 75°C with agitation (280 rpm). After a 10 minute holding at 75°C, acetic acid (18.9 g) and water (5.7 g) are charged to the flask. Propylene oxide (33 ml) is then added subsurface via syringe pump over 3 hours and the reaction held for 4 hours. The resultant product is then vacuum distilled, and methanol is removed under vacuum at 80°C over a period of 6 hours. The resulting product, is a quaternised polyester amide salt, is cooled and 543g collected. The collected material has a TAN of 13.6 mg KOH/g, a TBN of 27.27 mg KOH/g, a kinematic viscosity at 100°C of 209.0 mm²/s (as measured by ASTM D445), an acetate peak by IR at 1574 cm⁻¹, and is 1.36% nitrogen.

CE1 is a comparative dispersant based on Example 2 of GB 1 373 660.

CE2 is a comparative dispersant based on Example 5 of US 4,224,212.

Dispersant Evaluation Test 1: A series of blue mill bases are prepared utilising Dispersants 1 to 8, CE1 and CE2. The mill bases are prepared by dissolving a dispersant 1 to 8 (or CE1 or CE2) (0.55 g) in a solvent mixture of 6.5 g toluene. Glass beads (3mm, 17 parts) and Monastral Blue BG (ex. Heubach, Pigment Blue 2.8 g), 0.15 g of Solsperse®5000 (a fluidising agent) are added and the mixture is shaken on a horizontal shaker for 16 hours. The resulting dispersions were then assessed for fluidity using an arbitrary scale of A to E (good to bad). The milling grades obtained for Dispersant 1 to 7 are shown below. Comparative Example is a mill base not containing dispersant and it has a milling grade of E.

| Dispersant Example | Rating |
|---|---|
| 1 | A |
| 2 | A |
| 3 | A/B |
| 4 | A |
| 5 | A/B |
| 6 | A/B |
| 7 | A/B |
| 8 | A |
| CE1 | B/C |
| CE2 | C |

Overall, the data obtained from the tests indicates that the compositions of the invention may be capable of providing at least one of improved gloss, reduced haze, improved flocculation, resistance, increased colour strength improved flow characteristics, and increased stability.

Except in the Examples, or where otherwise explicitly indicated, all numerical quantities in this description specifying amounts of materials, reaction conditions, molecular weights, number of carbon atoms, and the like, are to be understood as modified by the word "about." Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements.

## Claims

1. A composition comprising a particulate solid; an organic medium; and a quaternised polyester salt which comprises a product obtained/obtainable by reaction of (i) a polyester containing a tertiary amino group; and (ii) a quaternising agent suitable for converting the tertiary amino group to a quaternary nitrogen, wherein the quaternising agent is a hydrocarbyl epoxide in combination with an acid, or mixtures thereof.

2. The composition of claim 1 wherein the polyester comprises the reaction product of a fatty carboxylic acid containing at least one hydroxyl group and a compound having an oxygen or nitrogen atom capable of condensing with said acid and further having a tertiary amino group.

3. The composition of claim 2 wherein the fatty carboxylic acid is represented by the formula: 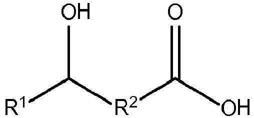 where R¹ is a hydrogen or a hydrocarbyl group containing from 1 to 20 carbon atoms and R² is a hydrocarbylene group containing from 1 to 20 carbon atoms; and
wherein the compound having an oxygen or nitrogen atom capable of condensing with said acid and further having a tertiary amino group is represented by the formula: 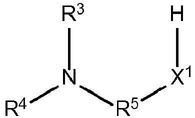 where R³ is a hydrocarbyl group containing from 1 to 10 carbon atoms; R⁴ is a hydrocarbyl group containing from 1 to 10 carbon atoms; R⁵ is a hydrocarbylene group containing from 1 to 20 carbon atoms; and X¹ is O or NR⁶ where R⁶ is a hydrogen or a hydrocarbyl group containing from 1 to 10 carbon atoms.

4. The composition of any preceding claim, wherein the quaternised polyester salt comprises a quaternised polyester amide salt, wherein the polyester containing a tertiary amino group used to prepare said quaternised polyester salt comprises a polyester amide containing a tertiary amino group.

5. The composition of any preceding claim, wherein the quaternised polyester salt comprises a cation represented by the following formula: 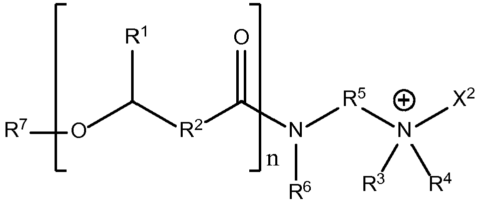 where R¹ is a hydrogen or a hydrocarbyl group containing from 1 to 20 carbon atoms and R² is a hydrocarbylene group containing from 1 to 20 carbon atoms; R³ is a hydrocarbyl group containing from 1 to 10 carbon atoms; R⁴ is a hydrocarbyl group containing from 1 to 10 carbon atoms; R⁵ is a hydrocarbylene group containing from 1 to 20 carbon atoms; R⁶ is a hydrogen or a hydrocarbyl group containing from 1 to 10 carbon atoms; n is a number from 1 to 10; R⁷ is hydrogen, a hydrocarbonyl group containing from 1 to 22 carbon atoms, or a hydrocarbyl group containing from 1 to 22 carbon atoms; and X² is a group derived from the quaternising agent.

6. The composition of claim 2 wherein the compound having an oxygen or nitrogen atom capable of condensing with said acid and further having a tertiary amino group comprises N,N-diethylethylenediamine, N,N-dimethylethylenediamine, N,N-dibutylethylenediamine, N,N-dimethyl-1,3-diaminopropane, N,N-diethyl-1,3-diaminopropane, N,N-dimethylaminoethanol, N,N-diethylaminoethanol, or combinations thereof.

7. The composition of claim 2 wherein the fatty carboxylic acid containing at least one hydroxyl group comprises: 12-hydroxystearic acid; ricinoleic acid; 12-hydroxy dodecanoic acid; 5-hydroxy dodecanoic acid; 5-hydroxy decanoic acid; 4-hydroxy decanoic acid; 10-hydroxy undecanoic acid; or combinations thereof.

8. The composition of any preceding claim, wherein the quaternising agent comprises ethylene oxide, propylene oxide, butylene oxide, styrene oxide, or combinations thereof wherein the quaternising agent is used in combination with an acid.

9. A paint or ink composition comprising a particulate solid, an organic liquid, a binder and a quaternised polyester salt which comprises a product obtained/obtainable by reaction of (i) a polyester containing a tertiary amino group; and (ii) a quaternising agent suitable for converting the tertiary amino group to a quaternary nitrogen, wherein the quaternising agent is a hydrocarbyl epoxide in combination with an acid, or mixtures thereof.

10. A mill base composition comprising a particulate solid, an organic liquid and a quaternised polyester salt which comprises a product obtained/obtainable by reaction of (i) a polyester containing a tertiary amino group; and (ii) a quaternising agent suitable for converting the tertiary amino group to a quaternary nitrogen, wherein the quaternising agent is a hydrocarbyl epoxide in combination with an acid, or mixtures thereof.

11. The composition of any preceding claim, wherein the organic medium is an organic liquid or a plastics material.

12. The composition of any preceding claim, wherein the organic medium comprises at least 0.1% by weight of a polar organic liquid based on the total organic medium.

13. The composition of any preceding claim, wherein the particulate solid is a pigment or filler.

## Patentansprüche

1. Zusammensetzung umfassend einen teilchenförmigen Feststoff; ein organisches Medium; und ein quaternisiertes Polyestersalz, das ein Produkt umfasst, das durch die Reaktion erhalten wird/erhältlich ist von (i) einem Polyester, der eine tertiäre Aminogruppe enthält; und (ii) einem quaternisierenden Mittel, das zum Umwandeln der tertiären Aminogruppe in einen quaternären Stickstoff geeignet ist, wobei das quaternisierende Mittel ein Hydrocarbylepoxid in Kombination mit einer Säure oder Mischungen davon ist.

2. Zusammensetzung nach Anspruch 1, wobei der Polyester das Reaktionsprodukt umfasst von einer Carbonfettsäure, die mindestens eine Hydroxylgruppe enthält, und einer Verbindung, die ein Sauerstoff- oder Stickstoffatom aufweist, das in der Lage ist, mit der Säure zu kondensieren, und ferner eine tertiäre Aminogruppen aufweist.

3. Zusammensetzung nach Anspruch 2, wobei die Carbonfettsäure durch die Formel dargestellt ist: 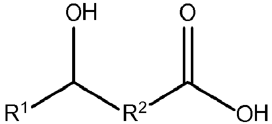 wobei R¹ eine Wasserstoff- oder eine Hydrocarbylgruppe ist, die 1 bis 20 Kohlenstoffatome enthält und R² eine Hydrocarbylengruppe ist, die 1 bis 20 Kohlenstoffatome enthält; und
wobei die Verbindung, die ein Sauerstoff- oder Stickstoffatom aufweist, das in der Lage ist, mit der Säure zu kondensieren, und ferner eine tertiäre Aminogruppe aufweist, durch die Formel dargestellt ist: 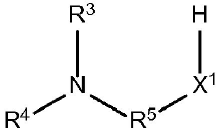 wobei R³ eine Hydrocarbylgruppe ist, die 1 bis 10 Kohlenstoffatome enthält; R⁴ eine Hydrocarbylgruppe ist, die 1 bis 10 Kohlenstoffatome enthält; R⁵ eine Hydrocarbylengruppe ist, die 1 bis 20 Kohlenstoffatome enthält; und X¹ O oder NR⁶ ist, wobei R⁶ eine Wasserstoff- oder eine Hydrocarbylgruppe ist, die 1 bis 10 Kohlenstoffatome enthält.

4. Zusammensetzung nach irgendeinem vorhergehenden Anspruch, wobei das quaternisierte Polyestersalz ein quaternisiertes Polyesteramidsalz umfasst, wobei der Polyester, der eine tertiäre Aminogruppen enthält und zum Herstellen des quaternisierten Polyestersalzes verwendet wird, ein Polyesteramid umfasst, das eine tertiäre Aminogruppe enthält.

5. Zusammensetzung nach irgendeinem vorhergehenden Anspruch, wobei das quaternisierte Polyestersalz ein Kation umfasst, das durch die folgende Formel dargestellt ist: 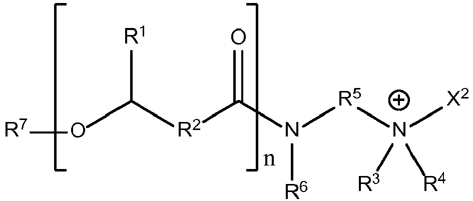 wobei R¹ eine Wasserstoff- oder eine Hydrocarbylgruppe ist, die 1 bis 20 Kohlenstoffatome enthält, und R² eine Hydrocarbylengruppe ist, die 1 bis 20 Kohlenstoffatome enthält; R³ eine Hydrocarbylgruppe ist, die 1 bis 10 Kohlenstoffatome enthält; R⁴ eine Hydrocarbylgruppe ist, die 1 bis 10 Kohlenstoffatome enthält; R⁵ eine Hydrocarbylengruppe ist, die 1 bis 20 Kohlenstoffatome enthält; R⁶ eine Wasserstoff-oder eine Hydrocarbylgruppe ist, die 1 bis zehn Kohlenstoffatome enthält; n eine Zahl von 1 bis 10 ist; R⁷ Wasserstoff, eine Hydrocarbylgruppe, die 1 bis 22 Kohlenstoffatome enthält, oder eine Hydrocarbylgruppe ist, die 1 bis 22 Kohlenstoffatome enthält; und X² eine Gruppe ist die von dem quaternisierenden Mittel abgeleitet ist.

6. Zusammensetzung nach Anspruch 2, wobei die Verbindung, die ein Sauerstoff- oder Stickstoffatom aufweist, das in der Lage ist, mit der Säure zu kondensieren und ferner eine tertiäre Aminogruppe aufweist, N,N-Diethylethylendiamin, N,N-Dimethylethylendiamin, N,N-Dibutylethylendiamin, N,N-Dimethyl-1,3-diaminopropan, N,N-Diethyl-1,3-diaminopropan, N,N-Dimethylaminoethanol, N,N-Diethylaminoethanol oder Kombinationen davon umfasst.

7. Zusammensetzung nach Anspruch 2, wobei die Carbonfettsäure, die mindestens eine Hydroxylgruppe enthält, Folgendes umfasst: 12-Hydroxystearinsäure; Ricinolsäure; 12-Hydroxydodecansäure; 5-Hydroxydodecansäure; 5-Hydroxydecansäure, 4-Hydroxydecansäure; 10-Hydroxyundecansäure; oder Kombinationen davon.

8. Zusammensetzung nach irgendeinem vorhergehenden Anspruch, wobei das quaternisierende Mittel Ethylenoxid, Propylenoxid, Butylenoxid, Styroloxid oder Kombinationen davon umfasst, wobei das quaternisierende Mittel in Kombination mit einer Säure verwendet wird.

9. Anstrichmittel- oder Tintenzusammensetzung umfassend einen teilchenförmigen Feststoff, eine organische Flüssigkeit, ein Bindemittel und ein quaternisiertes Polyestersalz, das ein Produkt umfasst, das durch die Reaktion erhalten wird/erhältlich ist von (i) einem Polyester, der eine tertiäre Aminogruppe enthält; und (ii) einem quaternisierenden Mittel, das zum Umwandeln der tertiären Aminogruppen in einen quaternären Stickstoff geeignet ist, wobei das quaternisierende Mittel ein Hydrocarbylepoxid in Kombination mit einer Säure, oder Mischungen davon ist.

10. Mahlgutzusammensetzung umfassend einen teilchenförmigen Feststoff, eine organische Flüssigkeit und ein quaternisiertes Polyestersalz, das ein Produkt umfasst, das durch die Reaktion erhalten wird/erhältlich ist von (i) einem Polyester, der eine tertiäre Aminogruppe enthält; und (ii) einem quaternisierenden Mittel, das zum Umwandeln der tertiären Aminogruppe in einen quaternären Stickstoff geeignet ist, wobei das quaternisierende Mittel ein Hydrocarbylepoxid in Kombination mit einer Säure, oder Mischungen davon ist.

11. Zusammensetzung nach irgendeinem vorhergehenden Anspruch, wobei das organische Medium eine organische Flüssigkeit oder ein Kunststoffmaterial ist.

12. Zusammensetzung nach irgendeinem vorhergehenden Anspruch, wobei das organische Medium mindestens 0,1 Gew.-% einer polaren organischen Flüssigkeit, auf das gesamte organische Medium bezogen, umfasst.

13. Zusammensetzung nach irgendeinem vorhergehenden Anspruch, wobei der teilchenförmige Feststoff ein Pigment oder Füllstoff ist.

## Revendications

1. Composition comprenant un solide sous forme de particules; un milieu organique; et un sel de polyester quaternisé qui comprend un produit obtenu/pouvant être obtenu par la réaction de (i) un polyester contenant un groupe amino tertiaire; et (ii) un agent de quaternisation convenant à la conversion du groupe amino tertiaire en un azote quaternaire, dans laquelle l'agent de quaternisation est un hydrocarbyl-époxyde en combinaison avec un acide, ou des mélanges de ceux-ci.

2. Composition selon la revendication 1 dans laquelle le polyester comprend le produit réactionnel d'un acide carboxylique gras contenant au moins un groupe hydroxyle et d'un composé ayant un atome d'oxygène ou d'azote capable de condensation avec ledit acide et en outre ayant un groupe amino tertiaire.

3. Composition selon la revendication 2 dans laquelle l'acide carboxylique gras est représenté par la formule: 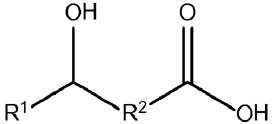 où R¹ est un atome d'hydrogène ou un groupe hydrocarbyle contenant de 1 à 20 atomes de carbone et R² est un groupe hydrocarbylène contenant de 1 à 20 atomes de carbone; et
dans laquelle le composé ayant un atome d'oxygène ou d'azote capable de condensation avec ledit acide et ayant en outre un groupe amino tertiaire est représenté par la formule: 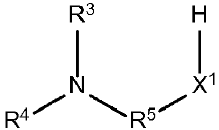 où R³ est un groupe hydrocarbyle contenant de 1 à 10 atomes de carbone; R⁴ est un groupe hydrocarbyle contenant de 1 à 10 atomes de carbone; R⁵ est un groupe hydrocarbylène contenant de 1 à 20 atomes de carbone; et X¹ est O ou NR⁶ où R⁶ est un atome d'hydrogène ou un groupe hydrocarbyle contenant de 1 à 10 atomes de carbone.

4. Composition selon l'une quelconque des revendications précédentes, dans laquelle le sel de polyester quaternisé comprend un sel d'amide de polyester quaternisé, dans laquelle le polyester contenant un groupe amino tertiaire utilisé pour préparer ledit sel de polyester quaternisé comprend un amide de polyester contenant un groupe amino tertiaire.

5. Composition selon l'une quelconque des revendications précédentes, dans laquelle le sel de polyester quaternisé comprend un cation représenté par la formule suivante: 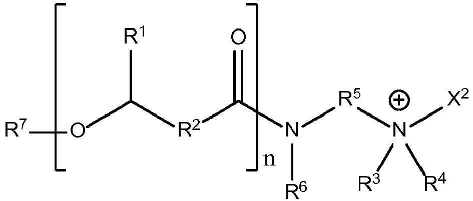 où R¹ est un atome d'hydrogène ou un groupe hydrocarbyle contenant de 1 à 20 atomes de carbone et R² est un groupe hydrocarbylène contenant de 1 à 20 atomes de carbone; R³ est un groupe hydrocarbyle contenant de 1 à 10 atomes de carbone; R⁴ est un groupe hydrocarbyle contenant de 1 à 10 atomes de carbone; R⁵ est un groupe hydrocarbylène contenant de 1 à 20 atomes de carbone; R⁶ est un atome d'hydrogène ou un groupe hydrocarbyle contenant de 1 à 10 atomes de carbone; n est un nombre d'une valeur de 1 à 10; R⁷ est un atome d'hydrogène, un groupe hydrocarbonyle contenant de 1 à 22 atomes de carbone, ou un groupe hydrocarbyle contenant de 1 à 22 atomes de carbone; et X² est un groupe dérivé de l'agent de quaternisation.

6. Composition selon la revendication 2 dans laquelle le composé ayant un atome d'oxygène ou d'azote capable de condensation avec ledit acide et ayant en outre un groupe amino tertiaire comprend de la N,N-diéthyléthylènediamine, de la N,N-diméthyléthylènediamine, de la N,N-dibutyléthylènediamine, du N,N-diméthyl-1,3-diaminopropane, du N,N-diéthyl-1,3-diaminopropane, du N,N-diméthylaminoéthanol, du N,N-diéthylaminoéthanol, ou leurs combinaisons.

7. Composition selon la revendication 2 dans laquelle l'acide carboxylique gras contenant au moins un groupe hydroxyle comprend: de l'acide 12-hydroxystéarique; acide ricinoléique; acide 12-hydroxy dodécanoïque; acide 5-hydroxy dodécanoïque; acide 5-hydroxy décanoïque; acide 4-hydroxy décanoïque; acide 10-hydroxy undécanoïque; ou leurs combinaisons.

8. Composition selon l'une quelconque des revendications précédentes, dans laquelle l'agent de quaternisation comprend l'oxyde d'éthylène, l'oxyde de propylène, l'oxyde de butylène, l'oxyde de styrène, ou leurs combinaisons dans laquelle l'agent de quaternisation est utilisé en combinaison avec un acide.

9. Composition de peinture ou d'encre comprenant un solide sous forme de particules, un liquide organique, un liant et un sel de polyester quaternisé qui comprend un produit obtenu/pouvant être obtenu par la réaction de (i) un polyester contenant un groupe amino tertiaire; et (ii) un agent de quaternisation convenant à la conversion du groupe amino tertiaire en un azote quaternaire, dans laquelle l'agent de quaternisation est un hydrocarbyl-époxyde en combinaison avec un acide, ou des mélanges de ceux-ci.

10. Composition de base pour broyage comprenant un solide sous forme de particules, un liquide organique et un sel de polyester quaternisé qui comprend un produit obtenu/pouvant être obtenu par la réaction de (i) un polyester contenant un groupe amino tertiaire; et (ii) un agent de quaternisation convenant à la conversion du groupe amino tertiaire en un azote quaternaire, dans laquelle l'agent de quaternisation est un hydrocarbyl-époxyde en combinaison avec un acide, ou des mélanges de ceux-ci.

11. Composition selon l'une quelconque des revendications précédentes, dans laquelle le milieu organique est un liquide organique ou une matière plastique.

12. Composition selon l'une quelconque des revendications précédentes, dans laquelle le milieu organique comprend au moins 0,1 % en poids d'un liquide organique polaire sur la base du milieu organique total.

13. Composition selon l'une quelconque des revendications précédentes, dans laquelle le solide sous forme de particules est un pigment ou une charge.
